# FASCICULE DE BREVET EUROPEEN

(11) **EP 1 377 151 B1**
(45) Date de publication et mention de la délivrance du brevet: **09.09.2009**
(21) Numéro de dépôt: 02703676.3
(22) Date de dépôt: 07.02.2002
(51) Int. Cl.: A01C 1/06

(54) **PROCEDE PAR VOIE SECHE D'ENROBAGE DE SEMENCES**
TROCKENVERFAHREN FÜR SAMENÜBERZÜGE
DRY SEED COATING METHOD

(30) Priorité: 07.02.2001 FR 0101716
(43) Date de publication de la demande: 07.01.2004
(73) Titulaire: RHODIA CHIMIE, 92512 Boulogne-Billancourt (FR)
(72) Inventeur: JOUBERT, Daniel, F-60500 VINEUIL SAINT-FIRMIN (FR)
(74) Mandataire: Delenne, Marc
(86) Numéro de dépôt international: PCT/FR2002/000479
(87) Numéro de publication internationale: WO 2002/062124

(56) Documents cités:
- EP-A- 0 187 341
- WO-A-98/25710
- US-A- 5 129 180

## Description

La présente invention a pour objet un procédé d'enrobage par voie sèche de semences.

L'enrobage des semences de plantes diverses a été développé dans l'optique à la fois de protéger lesdites semences et d'en préserver au maximum leur capacité à germer. En effet, les semences peuvent être consommées par des animaux, tels que les oiseaux, les rongeurs. Elles peuvent de même être détruites par l'attaque de champignons comme les moisissures ou autres organismes responsables de la fonte des semis.

Les procédés classiques consistent à mettre en contact les semences avec une solution ou une dispersion comprenant un polymère filmogène. Une fois la mise en contact réalisée, l'ensemble est séché afin d'évaporer l'eau. De tels procédés présentent de nombreux inconvénients. Tout d'abord, ils nécessitent la mise en contact des semences avec des quantités d'eau non négligeables. En effet, la teneur en eau apportée est du même ordre de grandeur que celle du polymère compris dans la solution ou dispersion pulvérisée sur les semences. Or l'élimination de l'eau s'avère coûteuse. Par ailleurs, le mouillage et le séchage peut aussi être la cause d'une certaine désactivation de la graine, si des précautions adéquates ne sont pas prises, par exemple, éviter d'atteindre des températures trop élevées. Par ailleurs, si l'eau n'est pas totalement éliminée, il y a des risques d'avoir une germination prématurée de la semence, ou bien son pourrissement. Un tel procédé est connu du document EP-A- 0187341.

La présente invention a pour objet de proposer une solution aux difficultés décrites ci-dessus.

Ainsi, l'invention a pour objet un procédé d'enrobage par un film polymérique de semences telle qu'il est caractérisé dans la revendication 1.

Comme on peut le constater, le procédé selon l'invention met en oeuvre des quantités d'eau considérablement plus faibles que celles introduites dans les procédés classiques d'enrobage. En effet, la teneur en eau ajoutée peut être nulle ou diminuée par 3 à 10, tout en permettant la formation d'un film régulier sur la semence.

De plus, l'invention permet d'obtenir divers type d'enrobage. Ainsi, les semences peuvent être simplement pelliculées, c'est-à-dire que le film polymérique présente une épaisseur telle que la taille moyenne de la graine n'est pas modifiée de manière substantielle. Ce type d'enrobage est approprié si l'on veut principalement protéger les semences.

L'invention permet de même d'obtenir des films polymériques d'épaisseur plus importante. Ce type d'enrobage est particulièrement approprié si l'on souhaite alourdir les semences ou bien leur donner une forme particulière plus adaptée pour un semis régulier et efficace, que celui-ci ait lieu au moyen d'un semoir, ou par voie aérienne.

En outre, le film polymérique enrobant les semences selon l'invention est tel qu'il se redisperse lorsqu'il est en présence d'une teneur en eau suffisante.

Un autre avantage de la présente invention est que le film polymérique peut comprendre des substances actives, comme par exemple des répulsifs pour animaux, des fongicides, rendant plus efficace le rôle de barrière du film polymérique.

Mais d'autres avantages et caractéristiques de l'invention apparaîtront plus clairement à la lecture de la description qui va suivre.

Le procédé selon l'invention peut être appliqué à tout type de semences.

Ainsi, les semences dont la taille moyenne est comprise entre 0,1 mm et 50 cm, de préférence entre 0,5 mm et 10 cm, peuvent être mises en oeuvre de manière avantageuse dans la présente invention.

A titre d'exemples non limitatifs de semences susceptibles de faire l'objet du traitement selon l'invention, on peut citer les semences choisies parmi les semences de plantes potagères et florales, les céréales (blé, maïs, sorgho, ...), les plantes oléagineuses, les plantes fourragères et à gazon.

Par ailleurs, la présente invention permet de former un film polymérique dont l'épaisseur moyenne est comprise dans un domaine relativement étendu. Plus particulièrement, l'épaisseur moyenne du film polymérique est comprise entre 20 µm et 10 mm, de préférence comprise entre 20 µm et 100 µm.

La semence est donc mise en contact avec au moins un polymère filmogène émulsionnable ou redispersable dans l'eau, mais non soluble dans l'eau, se présentant sous la forme d'une poudre et étant éventuellement additivé.

Ces polymères sont plus particulièrement obtenus par polymérisation en émulsion, de monomères à insaturations éthyléniques.

Plus particulièrement, le ou les monomères sont choisis parmi :
- les acides mono-et di-carboxyliques présentant au moins une insaturation éthylénique (double liaison carbone-carbone), comprenant par exemple en C₂-C₁₀, comme l'acide acrylique, l'acide méthacrylique, l'acide itaconique, l'acide maléique, l'acide fumarique ;
- les esters d'acides monocarboxyliques précités, avec les alcanols par exemple en C₁-C₁₂, tels que l'acrylate de méthyle, l'acrylate d'éthyle, l'acrylate de propyle, l'acrylate de n-butyle, l'acrylate d'isobutyle, l'acrylate de 2-éthylhexyle, le méthacrylate de méthyle, le méthacrylate d'éthyle, le méthacrylate de n-butyle, le méthacrylate d'isobutyle ;
- les esters d'acides monocarboxyliques précités avec les alcanediols par exemple en C₂-C₈, tels que le mono (meth) acrylate de glycol, le mono(méth)acrylate d'hydroxypropyle, le mono(meth) acrylate de 1-4 butanediol ainsi que les monomères comportant deux doubles liaisons polymérisables comme le diméthacrylate d'éthylène-glycol ;
- les mono-alkylesters des acides dicarboxyliques précités avec les alcanols ayant de préférence 1 à 4 atomes de carbone et leur dérivés N-substitués ;
- les amides des acides mono- et di-carboxyliques précités ou dérivés, comme l'acrylamide, le méthacrylamide, le N-méthylolacrylamide ou -méthacrylamide ;
- les esters vinyliques d'acide carboxylique saturé par exemple en C₂-C₁₀, comme l'acétate de vinyle, le versatate® de vinyle, le propionate de vinyle ;
- les nitriles vinyliques par exemple en C₃-C₁₂, l'acrylonitrile et le méthacrylonitrile ;
- les monomères vinylaromatiques, comme le styrène, l'alpha-méthylstyrène ou le vinyltoluène ;
- les monomères hydrocarbonés aliphatiques comprenant au moins une insaturation éthylénique, ou les diènes aliphatiques, par exemple en C₄-C₁₀, comme l'isobutylène, le diisobutylène, le butadiène, l'isoprène ;
- les monomères éthyléniquement insaturés comportant au moins un groupe acide sulfonique et ses sels, par exemple de métal alcalin ou d'ammonium, comme entre autres l'acide vinylsulfonique, l'acide vinylbenzène sulfonique, l'acide alpha-acrylamido méthylpropane-sulfonique, le 2- sulfoéthylène méthacrylate, l'acide 2-propène 1-sulfonique, l'acide méthallyl sulfonique ;
- les monomères éthyléniquement insaturés comportant au moins un groupe amino secondaire, tertiaire ou quaternaire ou un groupe hétérocyclique contenant de l'azote, par exemple les vinylpyridines, le vinylimidazole, les (meth)acrylates d'aminoalkyle et les (meth)acrylamides d'aminoalkyle comme le diméthylaminoéthylacrylate ou méthacrylate, le ditertiobutylamino-éthylacrylate ou - méthacrylate, le diméthylamino méthylacrylamide ou -méthacrylamide ... de même que les monomères zwitterioniques comme l'acrylate de sulfopropyl (diméthyl) aminopropyle.

Selon un premier mode préféré, le polymère mis en oeuvre est issu de la polymérisation d'au moins un monomère du type des monomères vinylaromatiques et/ou des monomères diènes aliphatiques.

Il peut s'agir, de manière avantageuse, d'un copolymère insoluble dans l'eau préparé à partir d'un mélange de styrène et de butadiène.

Selon un autre mode préféré, le polymère est issu de la polymérisation d'au moins un monomère choisi parmi les esters vinyliques d'acide carboxylique comme l'acétate de vinyle, le versatate® de vinyle, le propionate de vinyle. Il peut notamment s'agir d'un copolymère versatate® de vinyle / acétate de vinyle, d'un homopolymère acétate de vinyle.

Comme cela a été indiqué auparavant, le polymère est de manière préférentielle obtenu par polymérisation en émulsion des monomères.

Une telle polymérisation est habituellement mise en oeuvre en présence d'un émulsifiant et d'un initiateur de polymérisation.

Les monomères peuvent être introduits en mélange ou séparément et simultanément dans le milieu réactionnel, soit avant le début de la polymérisation en une seule fois, soit au cours de la polymérisation par fractions successives ou en continu.

En tant qu'agent émulsifiant, on met en oeuvre généralement les agents anioniques classiques représentés notamment par les sels d'acides gras, les alkylsulfates, les alkylsulfonates, les alkylarylsulfates, les alkylarylsulfonates, les arylsulfates, les arylsulfonates, les sulfosuccinates, les alkylphosphates de métaux alcalins.

Ils sont en général employés à raison de 0,01 à 5 % en poids par rapport au poids total des monomères.

L'initiateur de polymérisation en émulsion, qui est hydrosoluble, est choisi plus particulièrement par les hydroperoxydes tels que l'eau oxygénée, l'hydroperoxyde de tertiobutyle et par les persulfates tels que le persulfate de sodium, le persulfate de potassium, le persulfate d'ammonium.

Il est typiquement employé en quantités comprises entre 0,05 et 2 % en poids par rapport au total des monomères.

Ces initiateurs sont éventuellement associés à un réducteur, tel que le bisulfite ou le formaldéhyde sulfoxylate de sodium, les polyéthylène amines, les sucres : dextrose, saccharose, les sels métalliques.

S'ils sont présents, les réducteurs sont mis en oeuvre avec des concentrations variant de 0 à 3 % en poids par rapport au poids total des monomères.

La température de réaction, variant selon la nature de l'initiateur mis en oeuvre, est généralement comprise entre 0 et 100 °C, et de préférence, entre 50 et 80 °C.

On peut utiliser un agent de transfert dans des proportions allant de 0 à 3 % en poids par rapport au(x) monomère(s). Ledit agent de transfert est généralement choisi parmi les mercaptans tels que le n-dodécylmercaptan, le tertiododécylmercaptan, le tertiobutylmercaptan ou leurs esters comme le méthylmercaptopropionate ; le cyclohexène ; les hydrocarbures halogénés tels que le chloroforme, le bromoforme, le tétrachlorure de carbone.

A l'issue de la polymérisation, le polymère se présente sous forme d'une dispersion en phase aqueuse de particules du polymère. Il s'agit de ce qu'on appelle couramment un latex. Dans ce qui suit, on utilisera indifféremment les termes "latex" ou "polymère avant séchage".

La valeur de l'extrait sec du latex est en général de l'ordre de 50 % en poids.

Quant à la taille moyenne des particules de latex, elle est habituellement comprise entre 0,035 et 5 µm.

Le polymère mis en oeuvre dans la présente invention, se présente sous forme d'une poudre ré-émulsionnable ou redispersable dans l'eau.

Une telle poudre peut être obtenue par toute méthode connue de l'homme du métier, notamment par élimination de l'eau du latex.

Cette opération peut être réalisée, par exemple, par congélation, puis sublimation ou lyophilisation

Mais de préférence, on élimine l'eau du latex par une opération de séchage, en particulier de séchage par atomisation (pulvérisation - séchage).

Le séchage par atomisation peut être effectué dans tout appareil connu, comme une tour d'atomisation associant une pulvérisation réalisée par une buse ou une turbine avec un courant d'air chaud.

Les conditions de mise en oeuvre sont fonction du latex et des composés qui y sont présents ainsi que de l'atomiseur utilisé. Ces conditions sont généralement telles que la température du latex et des composés, au cours du séchage, ne cause pas de dégradation substantielle de l'ensemble. Classiquement, la température ne dépasse pas 150°C, de préférence ne dépasse pas 110°C.

Selon une variante avantageuse de la présente invention est constituée par des polymères additivés. Plus particulièrement, ces additifs sont des substances actives utilisables soit pour la protection de la semence, ou encore pour augmenter son pouvoir de germination, ou leurs combinaisons.

Toutes les substances actives, qu'elles soient solides, liquides (telles quelles ou en solution dans un solvant) conviennent à l'invention, dans la mesure où elles ne sont pas miscibles ou ne sont que très faiblement miscibles dans l'eau. Par faiblement miscible, on entend des substances actives dont la solubilité dans l'eau à pH 7 ne dépasse pas 20% en poids, de préférence ne dépasse pas 10 % en poids.

Par la suite, on entendra par substance active, soit une substance active pure telle quelle ou dans un solvant, soit un mélange de substances actives telles quelles ou dans un solvant.

Lesdites substances actives peuvent également avoir pour fonction d'être répulsifs pour les animaux, les oiseaux en particulier ou d'être des fongicides.

De préférence, le ou les additifs (substance(s) active(s)) présents dans le polymère filmogène, sont introduits avant le séchage dudit polymère (qui est à ce stade sous la forme d'un latex).

De préférence la teneur en additif ne dépasse pas la limite de solubilité de l'additif dans le polymère avant séchage (latex). Plus particulièrement la teneur en additif est inférieure ou égale à 30 % en poids du polymère sec.

Il est à noter que l'introduction de l'additif peut être réalisée soit au cours de la synthèse même dudit polymère filmogène, soit après la synthèse dudit polymère ; cette dernière voie étant préférée.

Il peut être avantageux de mettre en oeuvre lors de l'introduction de l'additif, un solvant dit "de transfert" gonflant du polymère.

Parmi les solvants de transfert, on peut citer sans intention de s'y limiter, les esters de mono ou polyacides carboxyliques (acétate d'éthyle, propionate de méthyle, le mélange de glutarate / adipate / succinate de méthyle) ; les cétones (méthyléthylcétone, cyclohexanone) ; les alcools (propanol, pentanol) ; les hydrocarbures aliphatiques et cycliques (heptane, cyclohexane, décaline) ; des dérivés aliphatiques chlorés (dichlorométhane) ; les dérivés aromatiques chlorés ou non (toluène, éthylbenzène, trichlorobenzène) ; les dialkylethers.

On peut ajouter, si nécessaire, au polymère dispersé (latex), une quantité supplémentaire d'agent émulsifiant, de préférence un agent émulsifiant non ionique polyoxyalkyléné.

S'il est présent, la teneur en cet agent est l'ordre d'environ 0,1 à 2 % en poids de la substance active.

La substance active est introduite sous agitation, de préférence à une température de 20 à 50°C pendant 1 à 24 heures.

S'il est présent, le solvant de transfert peut être éventuellement éliminé par évaporation sous vide si la substance active est un solide.

En outre, il peut être préférable d'effectuer l'opération de séchage du latex en présence d'adjuvants de mise en forme comme les anti-mottants ou les d'adjuvants de dispersion qui assureront soit la filmification soit la redispersion de la poudre de latex dans l'eau.

A titre d'anti-mottants, on peut utiliser une charge minérale présentant une granulométrie inférieure à 20 µm environ. Il peut s'agir, par exemple, de silice, de carbonate de calcium, de kaolin, de sulfate de baryum, d'oxyde de titane, de talc, d'alumine hydratée, de bentonite et de sulfoaluminate de calcium (blanc satin).

A titre d'adjuvants de dispersion, divers produits peuvent être utilisés selon la nature du latex à sécher.

Ainsi, par exemple, lorsque le latex est issu de la polymérisation de monomères à insaturation éthylénique, l'adjuvant de dispersion peut être un acide aminé ou un sel d'acide aminé, tel qu'un sel de sodium, de potassium, d'ammonium ou de calcium.

Lorsque le latex est issu de la polymérisation de monomères d'esters vinyliques d'acides carboxyliques, l'adjuvant de dispersion est généralement un alcool polyvinylique.

La poudre obtenue après le séchage du latex, comprenant le cas échéant les additifs, adjuvants précités, se présente plus particulièrement sous la forme d'une poudre dont la taille moyenne des particules est comprise entre 100 et 200 µm. Il est à noter que la taille du latex permet d'éviter tout problème de poussiérage.

De telles poudres sont notamment commercialisées par la société Rhodia Chimie sous les dénominations Rhoximat® PSB 150, Rhoximat® PAV 22, Rhoximat® PA 050.

Le procédé d'enrobage des semences va maintenant être décrit.

Ainsi que cela a été indiqué précédemment, les semences non enrobées sont mélangées avec au moins un polymère filmogène se présentant sous la forme d'une poudre, éventuellement additivé.

De manière avantageuse, la quantité de polymère, le cas échéant comprenant un ou plusieurs additifs et/ou adjuvants, représente 1 à 30 % en poids par rapport au poids de semence.

La poudre de polymère filmogène peut de même être mise en oeuvre pour l'enrobage en présence d'au moins un agent de mise en forme choisi parmi les charges, les agents anti-mottants, les agents mouillants, les agents dispersants, seuls ou en mélanges.

A titre d'exemple de charges, on peut citer notamment le carbonate de calcium, le kaolin, la silice, une bentonite.

Comme agents anti-mottants, on peut citer par exemple les phosphates d'ammonium ou de sodium, le (bi)carbonate de sodium, le métasilicate de sodium, les sulfates de magnésium, zinc ou calcium, l'hydroxyde de magnésium, le chlorure de calcium, les tamis moléculaires.

Comme exemples d'agents mouillants, on peut citer par exemple les alkylnaphtalène sulfonates, les alkyl-benzènes sulfonates, les alkylsulfosuccinates, les alkylphénols éthoxylés.

A titre d'exemple d'agents dispersants, on peut citer entre autres les lignosulfonates (sels de sodium, calcium ou ammonium), les copolymères anhydride maléique / isobutylène (sels de sodium ou d'ammonium), les acides phénylsulfoniques condensés (sels de sodium), ou encore les polymères naphtalène sulfonate / formaldéhyde condensés (sels de sodium ou d'ammonium).

Ces agents de mise en forme, s'ils sont présents, sont avantageusement ajoutés lors de l'étape d'enrobage, sous une forme physique de préférence également solide et/ou pulvérulente.

Plus particulièrement, s'ils sont présents, la teneur en ces agents de mise en forme est inférieure à la teneur en polymère.

Il est précisé que selon la quantité, introduite de polymère filmogène comprenant éventuellement les additifs et/ou adjuvants, ainsi que de la quantité d'agents de mise en forme, le film obtenu sera plus ou moins épais.

Comme il a été dit plus haut, l'objectif du traitement de la semence peut être un pelliculage, qui véhicule un additif "actif", ou un enrobage, qui a pour but de modifier la taille, le poids ou la forme de la semence.

Le procédé selon l'invention peut être mis en oeuvre dans les deux cas, mais plus particulièrement pour le cas du pelliculage.

Ainsi, lorsque la semence est pelliculée, les dimensions de la semence et son aspect (en d'autres termes sa forme générale) ne changent pas d'ordre de grandeur. De manière très avantageuse, l'épaisseur du film est comprise entre 20 et 100 µm. Un tel mode de réalisation préféré est plus particulièrement mis en oeuvre avec au moins un polymère, comprenant éventuellement les additifs et/ou adjuvants, sans additif de mise en forme ou avec de faibles quantités.

Plus particulièrement, l'enrobage a lieu en premier lieu, en mettant en contact des poudres (polymère, éventuellement additifs de mise en forme et autres composés employés lors de l'enrobage et qui seront décrits plus bas.)

De manière avantageuse, le mélange a lieu dans un appareil à lit roulant. Parmi les appareils utilisables de ce type, on peut citer notamment les tambours, les drageoirs.

On évite en règle générale de mettre en oeuvre des appareillages dans lesquels le cisaillement serait trop important, risquant de briser les semences.

Une fois le mélange de ces poudres effectué, on peut soit ajouter de l'eau dans une quantité telle que la proportion pondérale polymère sec (c'est-à-dire en ne prenant pas ne compte les additifs et/ou adjuvants s'ils sont présents) / eau soit comprise entre 10/1 et 3/1, soit élever la température de l'ensemble à une température inférieure à celle de dégradation de ladite semence, soit effectuer une combinaison de ces deux opérations. Le terme "dégradation" signifie que la semence a perdu ces capacités de germination.

Plusieurs variantes sont envisageables à ce stade du procédé.

La première variante consiste donc à préparer le film polymérique en ajoutant de l'eau, dans les proportions indiquées plus haut.

L'eau est de préférence ajoutée par pulvérisation sur le mélange polymère, semence, et éventuellement les additifs de mise en forme, de manière classique.

Selon une autre possibilité de cette première variante, l'eau est apportée en ajoutant un sel minéral hydraté susceptible de libérer par élévation de la température, l'eau d'hydratation.

A titre d'exemple de tels sels, on peut citer les phosphates alcalins hydratés, comme les phosphates mono- ou di- sodiques décahydratés, les sulfates de métaux alcalins, comme le sulfate de sodium heptahydraté, le borax décahydraté, etc.

Il est à noter, et cela constitue un avantage supplémentaire, que l'emploi de ce type de sels peut constituer un apport d'engrais futur pour la plante.

Une deuxième variante du procédé d'enrobage selon l'invention consiste à ne pas apporter d'eau mais à créer le film polymérique en élevant la température du mélange de poudres obtenu.

Cette variante est particulièrement avantageuse dans le cas où le polymère filmogène présente une température de transition vitreuse relativement basse, par exemple de l'ordre de 20 à 40°C.

Il est indiqué que selon le type d'appareillage mis en oeuvre pour faire ce mélange, et selon les conditions dans lesquelles il est employé, l'élévation de température peut être atteinte simplement par les frottements des diverses poudres entre elles (polymère, éventuellement additifs, adjuvants, semence, additifs de mise en forme, etc) existant durant le mélange.

Une dernière variante consiste à combiner les deux variantes précitées, simultanément ou successivement ; la première possibilité étant préférée.

Notons que si les opérations ont lieu successivement, l'élévation de la température est de préférence effectuée une fois l'eau ajoutée. En effet, l'élévation de la température, dans ce cas de figure, peut avoir le double rôle de ramollir le polymère et provoquer sa coalescence qui entraînera la formation du film, mais aussi favorisera l'élimination du peu d'eau ajoutée.

Un exemple concret mais non limitatif de l'invention va maintenant être présenté.

### EXEMPLE

Dans un broyeur-mélangeur de type Lôdige, on introduit 600 g de semences de blé puis 60 g de poudre de polymère Rhoximat® PSB 150 (commercialisé par Rhodia Chimie), puis 20 g d'eau.

L'ensemble est mélangé pendant 10 minutes à vitesse 3 suivi d'un séchage sur séchoir rotatif à 60°C pendant 15 minutes.

Les semences obtenues sont parfaitement pelliculées.

Il est à noter qu'avec l'ajout de 3 ml d'eau, le polymère se redisperse.

## Revendications

1. Procédé d'enrobage par un film polymérique d'une semence, **caractérisé en ce que** l'on met en contact ladite semence avec au moins un polymère filmogène émulsionnable ou dispersable dans l'eau, se présentant sous forme de poudre et éventuellement additivé, puis:
- soit on ajoute de l'eau en quantité telle que la proportion pondérale polymère sec / eau soit comprise entre 10/1 et 3/1,
- soit on ajoute de l'eau en quantité telle que la proportion pondérale polymère sec / eau soit comprise entre 10/1 et 3/1, et, simultanément ou successivement, on élève la température de l'ensemble à une température inférieure à celle de dégradation de ladite semence,
- soit on élève la température de l'ensemble à une température inférieure à celle de dégradation de ladite semence, sans apporter d'eau.

2. Procédé selon la revendication 1, **caractérisé en ce que** le polymère filmogène est obtenu par polymérisation en émulsion, de monomères à insaturation(s) éthylénique(s,) suivi d'une étape d'élimination de l'eau.

3. Procédé selon la revendication 2, **caractérisé en ce que** le ou les monomères peuvent être choisis parmi :
- les acides mono-et di-carboxyliques présentant au moins une insaturation éthylénique ;
- les esters d'acides monocarboxyliques précités, avec les alcanols ;
- les esters d'acides monocarboxyliques précités avec les alcanediols ;
- les mono-alkylesters des acides dicarboxyliques précités avec les alcanols et leur dérivés N-substitués ;
- les amides des acides mono- et di-carboxyliques précités ou dérivés ;
- les esters vinyliques d'acide carboxylique saturé ;
- les nitriles vinyliques ;
- les monomères vinylaromatiques ;
- les monomères hydrocarbonés aliphatiques comprenant au moins une insaturation éthylénique, ou les diènes aliphatiques ;
- les monomères éthyléniquement insaturés comportant au moins un groupe acide sulfonique et ses sels ;
- les monomères éthyléniquement insaturés comportant au moins un groupe amino secondaire, tertiaire ou quaternaire ou un groupe hétérocyclique contenant de l'azote.

4. Procédé selon l'une des revendications 2 ou 3, **caractérisé en ce que** le polymère mis en oeuvre est issu de la polymérisation d'au moins un monomère du type des monomères vinylaromatiques et/ou des monomères diènes aliphatiques.

5. Procédé selon l'une des revendications 2 ou 3, **caractérisé en ce que** le polymère mis en oeuvre est issu de la polymérisation d'au moins un monomère choisi parmi les esters vinyliques d'acide carboxylique.

6. Procédé selon l'une des revendications précédentes, **caractérisé en ce que** le polymère comprend au moins un additif choisi parmi les substances actives pas ou très faiblement miscibles dans l'eau, utilisables soit pour la protection de la semence, ou encore pour augmenter son pouvoir de germination, ou leurs combinaisons.

7. Procédé selon l'une des revendications précédentes, **caractérisé en ce que** l'additif est introduit avant le séchage du polymère.

8. Procédé selon l'une des revendications précédentes, **caractérisé en ce que** la teneur en additif ne dépasse pas la limite de solubilité de l'additif dans le polymère avant séchage, de préférence elle est inférieure ou égale à 30 % en poids du polymère sec.

9. Procédé selon l'une des revendications précédentes, **caractérisé en ce que** l'étape d'élimination de l'eau est effectuée par séchage en présence d'adjuvants de mise en forme comme les anti-mottants ou les d'adjuvants de dispersion.

10. Procédé selon l'une des revendications précédentes, **caractérisé en ce que** la quantité de polymère, sous la forme de poudre, le cas échéant comprenant un ou plusieurs additifs et/ou adjuvants, représente 1 à 30 % en poids par rapport au poids de semence.

11. Procédé selon l'une des revendications précédentes, **caractérisé en ce que** l'on effectue la mise en contact dans un appareil à lit roulant.

12. Procédé selon l'une des revendications précédentes, **caractérisé en ce que** l'on met en oeuvre le polymère en présence d'au moins un agent de mise en forme choisi parmi les charges, les agents anti-mottants, les agents mouillants, les agents dispersants, seuls ou en mélanges.

13. Procédé selon l'une des revendications précédentes, **caractérisé en ce que** le film polymérique présente une épaisseur moyenne comprise entre 50 µm et 10 mm.

14. Procédé selon l'une des revendications précédentes, **caractérisé en ce que** la taille moyenne des semences varie entre 0,1 mm et 50 cm, de préférence entre 0,5 mm et 10 cm.

15. Procédé selon l'une des revendications précédentes, **caractérisé en ce que** les semences sont choisies parmi les semences de plantes potagères et florales, les céréales, les plantes oléagineuses, les plantes fourragères, le gazon.

16. Procédé selon l'une des revendications précédentes, **caractérisé en ce que** l'eau est apportée en ajoutant un sel minéral hydraté susceptible de libérer par élévation de la température, l'eau d'hydratation.

## Claims

1. Method for coating a seed with a polymeric film,
**characterized in that** said seed is brought into contact with at least one film-forming polymer which is emulsifiable or dispersible in water, and which is in the form of a powder and, optionally, has additive(s), then:
- either water is added in an amount such that the dry polymer/water proportion by weight is between 10/1 and 3/1,
- or water is added in an amount such that the dry polymer/water proportion by weight is between 10/1 and 3/1 and, simultaneously or successively, the temperature of the whole is raised to a temperature below that at which said seed degrades,
- or the temperature of the whole is raised to a temperature below that at which said seed degrades, without the provision of water.

2. Method according to Claim 1, **characterized in that** the film-forming polymer is obtained by emulsion polymerization of monomers with one or more ethylenic unsaturation(s), followed by a water elimination step.

3. Method according to Claim 2, **characterized in that** the monomer(s) may be chosen from:
- monocarboxylic and dicarboxylic acids having at least one ethylenic unsaturation;
- esters of abovementioned monocarboxylic acids, with alkanols;
- esters of abovementioned monocarboxylic acids, with alkanediols;
- mono-alkyl esters of the abovementioned dicarboxylic acids with alkanols and the N-substituted derivatives thereof;
- amides of the abovementioned monocarboxylic and dicarboxylic acids or derivatives;
- vinyl esters of saturated carboxylic acid;
- vinyl nitriles;
- vinylaromatic monomers;
- aliphatic hydrocarbon-based monomers comprising at least one ethylenic unsaturation, or aliphatic dienes;
- ethylenically unsaturated monomers comprising at least one sulphonic acid group and its salts;
- ethylenically unsaturated monomers comprising at least one secondary, tertiary or quaternary amino group or a heterocyclic group containing nitrogen.

4. Method according to either of Claims 2 and 3,
**characterized in that** the polymer used is derived from the polymerization of at least one monomer of the vinyl aromatic monomer and/or aliphatic diene monomer type.

5. Method according to either of Claims 2 and 3,
**characterized in that** the polymer used is derived from the polymerization of at least one monomer chosen from vinyl esters of a carboxylic acid.

6. Method according to one of the preceding claims,
**characterized in that** the polymer comprises at least one additive chosen from active substances that are immiscible or very weakly miscible in water, that can be used either for protecting the seed, or alternatively for increasing its germination capacity, or combinations thereof.

7. Method according to one of the preceding claims,
**characterized in that** the additive is introduced before the drying of the polymer.

8. Method according to one of the preceding claims,
**characterized in that** the content of additive does not exceed the limit of solubility of the additive in the polymer before drying, it is preferably less than or equal to 30% by weight of the dry polymer.

9. Method according to one of the preceding claims,
**characterized in that** the water elimination step is carried out by drying in the presence of formulation adjuvants such as anti-caking agents or dispersion adjuvants.

10. Method according to one of the preceding claims,
**characterized in that** the amount of polymer, in the form of a powder, where appropriate comprising one or more additive(s) and/or adjuvant(s), represents 1% to 30% by weight relative to the weight of seed.

11. Method according to one of the preceding claims,
**characterized in that** the bringing into contact is carried out in a rolling bed device.

12. Method according to one of the preceding claims,
**characterized in that** the polymer is used in the presence of at least one formulation agent chosen from fillers, anti-caking agents, wetting agents and dispersants, alone or as mixtures.

13. Method according to one of the preceding claims,
**characterized in that** the polymeric film has an average thickness of between 50 µm and 10 mm.

14. Method according to one of the preceding claims,
**characterized in that** the average size of the seeds ranges between 0.1 mm and 50 cm, preferably between 0.5 mm and 10 cm.

15. Method according to one of the preceding claims,
**characterized in that** the seeds are chosen from the seeds of edible and floral plants, cereals, oil-inducing plants, fodder plants, and grass.

16. Method according to one of the preceding claims,
**characterized in that** the water is provided by adding a hydrated mineral salt capable of releasing hydration water through an increase in the temperature.

## Patentansprüche

1. Verfahren zum Überziehen eines Samens mit einem Polymerfilm, **dadurch gekennzeichnet, daß** man den Samen mit mindestens einem in Wasser emulgierbaren oder dispergierbaren filmbildenden Polymer, das in Form eines Pulvers vorliegt und gegebenenfalls additiviert ist, in Berührung bringt und dann
- entweder Wasser in einer solchen Menge zugibt, daß das Gewichtsverhältnis trockenes Polymer/Wasser zwischen 10/1 und 3/1 liegt,
- oder Wasser in einer solchen Menge zugibt, daß das Gewichtsverhältnis trockenes Polymer/Wasser zwischen 10/1 und 3/1 liegt, und gleichzeitig oder nacheinander die Temperatur des Ganzen auf eine unter der Degradationstemperatur des Samens liegende Temperatur erhöht
- oder die Temperatur des Ganzen ohne Wasserzusatz auf eine unter der Degradationstemperatur des Samens liegende Temperatur erhöht.

2. Verfahren nach Anspruch 1, **dadurch gekennzeichnet, daß** man das filmbildende Polymer durch Emulsionspolymerisation von Monomeren mit einer oder mehreren ethylenischen Ungesättigtheiten und einen darauffolgenden Schritt der Entfernung von Wasser erhält.

3. Verfahren nach Anspruch 2, **dadurch gekennzeichnet, daß** das Monomer bzw. die Monomere ausgewählt sind unter:
- Mono- und Dicarbonsäuren mit mindestens einer ethylenischen Ungesättigtheit;
- Estern der obigen Monocarbonsäuren mit Alkanolen;
- Estern der obigen Monocarbonsäuren mit Alkandiolen;
- Monoalkylestern der obigen Dicarbonsäuren mit Alkanolen und ihren N-substituierten Derivaten;
- Amiden der obigen Mono- und Dicarbonsäuren oder Derivaten,
- Vinylestern gesättigter Carbonsäuren;
- Vinylnitrilen;
- vinylaromatischen Monomeren;
- aliphatischen Kohlenwasserstoffmonomeren mit mindestens einer ethylenischen Ungesättigtheit oder aliphatischen Dienen;
- ethylenisch ungesättigten Monomeren mit mindestens einer Sulfonsäuregruppe und ihren Salzen;
- ethylenisch ungesättigten Monomeren mit mindestens einer sekundären, tertiären oder quartären Aminogruppe oder einer stickstoffhaltigen heterocyclischen Gruppe.

4. Verfahren nach einem der Ansprüche 2 oder 3, **dadurch gekennzeichnet, daß** das eingesetzte Polymer aus der Polymerisation mindestens eines Monomers vom Typ vinylaromatischer Monomere und/oder aliphatischer Dienmonomere stammt.

5. Verfahren nach einem der Ansprüche 2 oder 3, **dadurch gekennzeichnet, daß** das eingesetzte Polymer aus der Polymerisation mindestens eines unter Vinylestern von Carbonsäuren ausgewählten Monomers stammt .

6. Verfahren nach einem der vorhergehenden Ansprüche, **dadurch gekennzeichnet, daß** das Polymer mindestens ein Additiv enthält, das unter nicht oder sehr schlecht mit Wasser mischbaren Wirkstoffen, die zum Schutz des Samens oder auch zur Erhöhung seines Keimungsvermögens verwendet werden, oder Kombinationen davon ausgewählt ist.

7. Verfahren nach einem der vorhergehenden Ansprüche, **dadurch gekennzeichnet, daß** man das Additiv vor dem Trocknen des Polymers einträgt.

8. Verfahren nach einem der vorhergehenden Ansprüche, **dadurch gekennzeichnet, daß** der Additivgehalt die Löslichkeit des Additivs in dem Polymer vor dem Trocknen nicht überschreitet und vorzugsweise kleiner gleich 30 Gew.-% des trockenen Polymers ist.

9. Verfahren nach einem der vorhergehenden Ansprüche, **dadurch gekennzeichnet, daß** der Schritt der Entfernung von Wasser durch Trocknen in Gegenwart von Konfektionierungshilfsstoffen wie Antibackmitteln oder Dispergierhilfsmitteln durchgeführt wird.

10. Verfahren nach einem der vorhergehenden Ansprüche, **dadurch gekennzeichnet, daß** die Polymermenge in Form von Pulver, gegebenenfalls mit einem oder mehreren Additiven und/oder Hilfsstoffen, 1 bis 30 Gew.-%, bezogen auf das Gewicht des Samens, beträgt.

11. Verfahren nach einem der vorhergehenden Ansprüche, **dadurch gekennzeichnet, daß** man das Inberührungbringen in einer Rollbettapparatur durchführt.

12. Verfahren nach einem der vorhergehenden Ansprüche, **dadurch gekennzeichnet, daß** man das Polymer in Gegenwart mindestens eines unter Füllstoffen, Antibackmitteln, Netzmitteln und Dispergiermitteln für sich alleine oder im Gemisch ausgewählten Konfektionierungsmittels einsetzt.

13. Verfahren nach einem der vorhergehenden Ansprüche, **dadurch gekennzeichnet, daß** der Polymerfilm eine durchschnittliche Dicke zwischen 50 µm und 10 mm aufweist.

14. Verfahren nach einem der vorhergehenden Ansprüche, **dadurch gekennzeichnet, daß** die durchschnittliche Größe der Samen zwischen 0,1 mm und 50 cm und vorzugsweise zwischen 0,5 mm und 10 cm variiert.

15. Verfahren nach einem der vorhergehenden Ansprüche, **dadurch gekennzeichnet, daß** die Samen unter Samen von Gemüse- und Blütenpflanzen, Getreide, Ölpflanzen, Futterpflanzen und Rasen ausgewählt sind.

16. Verfahren nach einem der vorhergehenden Ansprüche, **dadurch gekennzeichnet, daß** das Wasser durch Zugabe eines hydratisierten anorganischen Salzes, das zur Freisetzung des Hydratationswassers durch Erhöhung der Temperatur befähigt ist, beigebracht wird.
